# EUROPÄISCHE PATENTSCHRIFT

(11) **EP 1 503 101 B1**
(45) Veröffentlichungstag und Bekanntmachung des Hinweises auf die Patenterteilung: **26.04.2006**
(21) Anmeldenummer: 03017013.8
(22) Anmeldetag: 26.07.2003
(51) Int. Cl.: F16D 48/06, F16D 48/04

(54) **Hydraulisch betätigbare Lamellenkupplung**
Hydraulically actuated multiple disc clutch
Embrayage multidisques à commande hydraulique

(43) Veröffentlichungstag der Anmeldung: 02.02.2005
(73) Patentinhaber: ZF Sachs AG, 97424 Schweinfurt (DE)
(72) Erfinder: Moseler, Olaf, Dr., 97070 Würzburg (DE); Kundermann, Wolfgang, Dipl.-Ing., 97422 Schweinfurt (DE); Rohm, Axel, Dipl.-Ing.(FH), 97453 Schonungen (DE)

(56) Entgegenhaltungen:
- WO-A-02/25130
- DE-B- 1 044 622
- US-B1- 6 244 410

## Beschreibung

Die Erfindung bezieht sich auf eine hydraulisch betätigbare Lamellenkupplung zur Drehmomentübertragung im Antriebsstrang eines Kraftfahrzeugs mit einem Kolben, welcher die Lamellenkupplung betätigt und einer Federelementanordnung, welche den Kolben bei Nichtbetätigung zurückstellt.

Es sind bereits hydraulisch betätigbare Lamellenkupplungen bekannt (z B. DE 101 24 213 A1, DE 198 26 747 A1) welche hydraulisch betätigbare Lamellenkupplungen zeigen, die über einen Kolben mit zugeordnetem mitrotierenden Kolbenraum betätigt werden. Zur Rückstellung der Kolben sind Tellerfedern vorgesehen, welche den Kolben bei Nichtbetätigung bis zu einem Anschlag zurückstellen. Systembedingt erhöht sich jedoch mit steigender Lamellenanzahl der Verfahrweg des Kolbens, und damit der Federweg der Tellerfedern, was eine starke Beanspruchung der Tellerfeder bewirkt. Bei steigendem Federweg sinkt jedoch die Zahl der Lastwechsel, welche die Feder problemlos halten kann, bis es zum Bruch der Feder kommt. Eine radial größere Feder oder eine geringere Spannung der Feder erhöhen die Dauerhaltbarkeit der Feder. Nachteilig ist hierbei jedoch der größere Bauraumbedarf und bei geringerer Spannung der Tellerfeder die geringere Rückstellkraft des Kolbens und damit ein langsameres Öffnen der Lamellenkupplung, bzw. ein verlangsamter Drehmomentabbau der Lamellenkupplung.
Weiterhin kommt es bei Lamellenpaketen mit der Zeit zu einem sogenannten Setzen der Lamellen, was einen vergrößerten Kolbenweg bewirkt. Das Setzen der Lamellen wird hauptsächlich durch eine Verringerung der axialen Dicke von den Belaglamellen verursacht. Zum einen wird der Belag durch Abrieb und Verschleiß dünner und zum anderen wird eventuell die Wellung von in Umfangsrichtung gewellte Belaglamellen geringer, sodass die axiale Dicke eines druckbeaufschlagten drehmomentübertragenden Lamellenpaketes im Neuzustand größer ist als nach einer Einlaufzeit. Dies wiederum bedeutet das sich bei alternden Lamellenkupplungen der Kolbenhub erhöht. Weiterhin werden zur Übertragung von höheren Drehmomenten gerne mehr Lamellen eingesetzt, was bezüglich des Schleppmoments günstiger als eine Vergrößerung des Reibradius ist, da das Schleppmoment mit der dritten Potenz des Radius steigt, jedoch nur linear mit der Anzahl der Reibflächen. Nachteilig hierbei ist jedoch, dass der Kolbenverfahrweg über die bloße axiale Dickenzunahme des Lamellenpakets hin ansteigt, da die axialen Dicken der Lamellen mit Toleranzen behaftet sind, die insoweit berücksichtigt werden müssen, dass die Lamellenkupplung auch bei ungünstiger Toleranzsummation der einzelnen Lamellen betriebssicher geöffnet werden muss. Außerdem soll das Lüftspiel zwischen den einzelnen Reibflächen bei geöffneter Kupplung auch bei Erhöhung der Anzahl der Lamellen gleich bleiben, was den Kolbenverfahrweg zusätzlich vergrößert.

Weiterhin ist es bekannt, bei Lamellenkupplungen beim Schließen derselben einen sogenannten Vorsteuerdruck im Kolbenraum aufzubauen (z.B. DE 199 42 555 A1), der eine Leckage des Hydrauliksystems ausgleichen soll und den Kolbenraum vor dem eigentlichen Schließen der Kupplung füllen soll, damit Schaltvorgänge schneller und dynamischer gestaltet werden können. Hierbei werden periodische Druckmittelimpulse in Abhängigkeit der Leckage, welche von der Öltemperatur abhängt, und bei bevorstehenden Schaltungen von der Steuerung des Hydrauliksystems veranlasst, welche den Kolben in einem definierten Zustand halten sollen. Nachteilig hierbei ist jedoch, dass mit diesen Maßnahmen zwar der Kolbenhub einer schließenden Kupplung verringert wird, jedoch nicht der tatsächlich bewirkte Verfahrweg des Kolbens im Gesamten. Liegt kein Startkriterium für diese Druckmittelimpulse vor, nimmt der Kolben seine maximal mögliche Öffnungsstellung ein. Es kann sogar sein, dass der gesamte Verfahrweg eines Kolbens und die Lastwechsel einer Federelementanordnung im Zeitmittel größer sind als bei Verzicht auf die Druckmittelimpulse, da der Kolben beim Erreichen bestimmter Schaltkennlinien der Steuerung mittels der Druckmittelimpulse in seine definierte Stellung gebracht wird, unabhängig davon, ob tatsächlich ein Schaltvorgang folgt. Werden die Schaltkennlinien wieder verlassen, nimmt der Kolben aufgrund der Leckage wieder seine maximale Öffnungsstellung ein.

Hiervon ausgehend ist es Aufgabe der Erfindung, die Lebensdauer einer kolbenrückstellenden Federelementanordnung einer Lamellenkupplung zu erhöhen, ohne die Rückstellkraft zu verringern oder den Bauraumbedarf zu vergrößern.

Zur Lösung dieser Aufgabe ist erfindungsgemäß vorgesehen, dass beim Öffnen der Lamellenkupplung, der Druck im Kolbenraum auf einen Ablagedruck abgesenkt wird, der ein komplettes Rückstellen einer Federelementanordnung verhindert. Vorteilhaft hierbei ist, dass mittels des Ablagedrucks im Kolbenraum eine Kolbenposition ermittelt und eingestellt werden kann, welche direkt proportional einer Stellung der Federelementanordnung ist.
Für die Belastung der Federelementanordnung erweist es sich hierbei als nutzbringend, dass dadurch der Verfahrweg des Kolbens beim Öffnen als auch beim nächsten Schließen der Lamellenkupplung verringert wird und dadurch die Federelementanordnung einen geringeren Federweg als bei maximalem Verfahrweg durchfährt. Vorzugsweise wird bei geöffneter Lamellenkupplung dieser Ablagedruck nicht unterschritten und von einer Hydrauliksteuerung eingeregelt. Hierbei kann auch unter dem Ablagedruck kein definierter Druck, sondern vielmehr ein Druckbereich verstanden werden, welcher ein komplettes Rückstellen der Federelementanordnung verhindert.

Nach einem wesentlichen Merkmal der Erfindung wird der Ablagedruck so eingestellt, das ein Kolbenrückstellweg beim Öffnen der Lamellenkupplung minimiert wird. Vorteilhaft hierbei ist, dass der Kolben nur bis zu einer Position beim Öffnen rückgestellt wird, bei welchem die Rückstellkraft der Druckkraft durch den Ablagedruck entspricht und dadurch ein erneutes Schließen der Kupplungseinrichtung schneller und dynamischer erfolgt. Der Kolbendruck kann vom Ablagedruck ausgehend eingeregelt werden und der Kolben liegt schneller am Lamellenpaket der Lamellenkupplung an, wodurch diese früher Drehmoment übertragen kann. Weiterhin entfällt dadurch das Vorbefüllen des Kolbenraumes und Leckagen desselben werden durch das kontinuierliche Regeln und Halten des Ablagedrucks ausgeglichen. Dadurch ist ein Eindringen von Luft in den Kolbenraum, was bei Leerlaufen des Druckzylinders erfolgen kann, vermieden.

Eine erfindungsgemäße Ausgestaltung der Erfindung sieht dabei vor, dass der Ablagedruck kleiner einem Mindestdruck ist, welcher bewirkt, dass die Lamellenkupplung ein geringes Drehmoment überträgt und das Kraftfahrzeug mit geringer Geschwindigkeit kriecht. Vorzugsweise liegt der Ablagedruck geringfügig unter einem Kriechdruck, bei welchem die Kupplung anfängt nennenswert Drehmoment zu übertragen. Höchstvorzugsweise wird dazu der Schleifpunkt der Lamellenkupplung periodisch adaptiert um sowohl dieser als auch abhängig davon der Ablagedruck in der Hydrauliksteuerung gespeichert und eingestellt.

Nach einem wesentlichen Merkmal der Erfindung wird der Wert des Ablagedrucks, welcher im Kolbenraum eingestellt wird in Abhängigkeit von Betriebsparametern des Kraftfahrzeugs unterschiedlich eingestellt. Erfindungsgemäß ist hierbei vorgesehen, dass der Ablagedruck in Abhängigkeit folgenden Parameter eingestellt werden kann: Motordrehzahl, Drehzahl einer Getriebeeingangswelle, Öltemperatur, Drehmoment, Kühlvolumenstrom.
Vorteilhaft hierbei ist, den Ablagedruck bei steigender Motordrehzahl ebenfalls anzuheben und damit Fliehkräfte, welche auf den Kolben in Richtung Öffnen wirken, auszugleichen. Diese Fliehkrafteinflüsse treten trotz den Betätigungskolben zugeordneten Fliehkraftausgleichskammern auf und beeinflussen das übertragene Drehmoment der Lamellenkupplung drehzahlabhängig. Weiterhin kann ein hoher Kühlölvolumenstrom eine Überkompensation des Fliehkraftausgleichs bewirken, sodass der Kolben in Richtung Öffnen der Lamellenkupplung verschoben wird. Erfindungsgemäß ist deshalb weiterhin vorgesehen diese Fliehkrafteinflüsse mittels einem zusätzlichen Druckwert, einem sogenannten Druckoffset, welcher sowohl bei geöffneter als auch bei geschlossener Lamellenkupplung dem Kupplungsdruck aufaddiert wird, zu kompensieren. Bei geöffneter Lamellenkupplung wird dieser Druckoffset dem Ablagedruck überlagert. Weiterhin ist erfindungsgemäß vorgesehen, den Ablagedruck in Abhängigkeit einer Getriebeeingangswelle zu bestimmen. Vorzugsweise wird hierbei eine Differenzdrehzahl zwischen Drehzahl der Getriebeeingangswelle und der Motordrehzahl verwendet. Höchstvorzugsweise wird die Ablagedrucks bei Doppelkupplungssystemen mittels dieser Differenzdrehzahl bestimmt. Bei einem Doppelkupplungsgetriebe ist in der Regel eine erste Lamellenkupplung betätigt und überträgt Moment über einen entsprechend zugeordneten und im Getriebe eingelegten Gang. Zur Reduktion von Verlusten ist in der Regel im zweiten Teilgetriebe kein Gang eingelegt. Die Getriebeeingangswelle dreht in Abhängigkeit der Schleppmomente im Getriebe und der Schleppmomente in der zweiten Kupplung mit einer gewissen Drehzahl unterhalb der Motordrehzahl mit. Erfindungsgemäß wird nun die Differenzdrehzahl zwischen Motor- und Getriebeeingangswellendrehzahl durch Steuerung des Kupplungsbetätigungsdrucks auf einen gewissen Maximalwert geregelt. Vorzugsweise liegt der Wert der Differenzdrehzahl bei ca. 50 U/min. Hierdurch wird die Kupplung (in Abhängigkeit der Schleppmomente) bzw. die Kolbenposition in der Nähe des Schleifpunkts gehalten, so dass auch hierdurch der Federhub und damit die Belastung gesenkt wird. Nach einem weiteren Aspekt der Erfindung wird jedoch bei Temperaturen unter 0°C, bei denen grundsätzlich sehr hohe Schleppmomente auftreten, der Ablagedruck komplett auf null reduziert, um ein Einlegen der Gänge zu ermöglichen. Da derartig tiefe Temperaturen nur selten vorliegen, wird dadurch die Federlebensdauer nicht sonderlich verkürzt.

Ein wesentlicher Aspekt der Erfindung liegt darin, dass der Ablagedruck unabhängig von Schaltzuständen des Getriebes eingestellt wird. Vorteilhaft hierbei ist, dass der Federweg der Federelementanordnung bei jeder Betätigung des Kolbens, also beim Einfedern und beim Ausfedern minimiert ist, unabhängig davon, ob bei einem Doppelkupplungssystem beim Schalten eine Gangstufe erst eingelegt werden muss oder bereits eingelegt ist. Beim Öffnen der Lamellenkupplung wird der Kupplungsdruck auf den Ablagedruck reduziert und bleibt bei einem anschließenden Auslegen der Gangstufe im Getriebe konstant. Damit wird die Federelementanordnung bis zum nächsten Gangwechsel und Schließen der Lamellenkupplung nicht unnötig beansprucht.
In einer weiteren Ausgestaltung der Erfindung ist vorgesehen, dass der Ablagedruck des Kolbens unabhängig von Betriebsartenwahlstellungen eines Getriebewahlhebels eingestellt wird. Damit wird in allen Betriebsarten des Getriebes die Federbelastung minimiert. Weiterhin werden bei Wechseln zwischen den einzelnen Betriebsartenwahlstellungen des Getriebewahlhebels die Kolbenverfahrwege und damit die Belastung der Federelementanordnung reduziert. Beispielsweise wird der Fahrer beim Rangieren oder beim Freischaukeln des Kraftfahrzeuges den Getriebewahlhebel zwischen einer Vorwärtsfahrstufe und einer Rückwärtsfahrstufe wiederholt hin und her schalten, wovon erfindungsgemäß der Ablagedruck des Kolbens nicht beeinflusst wird. Weiterhin kann sogar bei einem sogenannten Segelbetrieb des Kraftfahrzeugs der Ablagedruck erhalten bleiben. Vorzugsweise wird der Ablagedruck im Kolbenraum nur bei endgültigem Abschalten und Verlassen des Fahrzeugs auf null abgesenkt und nach jeweils erstmaligem Starten des Kraftfahrzeugs aufgebaut.

Zusammenfassend kann festgestellt werden, dass die Dauerfestigkeit der Federelementanordnung dadurch optimiert wird, dass eine Kolbenposition zwischen der maximalen Öffnungsstellung und der Position welche dem Ablagedruck entspricht weitestgehend vermieden wird, wodurch ein Betrieb der Federelementanordnung mit einem eingeschränktem Federweg ermöglicht wird.
Ein erster Federweg, den die Federelementanordnung bei Aufbau eines Kolbendraumruckes von drucklosem Kolbenraum bis zum Ablagedruck, durchfährt, wird im Wesentlichen vermieden. Damit sinkt die Häufigkeit und der Weg des Einfederns der Federelementanordnung, was zu einer besseren Belastbarkeit der Federelementanordnung und zudem zu einer höheren Dynamik des Kupplungssystems führt.

Nach einer bevorzugten Ausgestaltung der Erfindung ist die Federelementanordnung als Tellerfederanordnung ausgebildet, wobei die Tellerfederanordnung aus einer einzelnen oder aus mehreren gleichsinnig oder gegensinnig geschichteten Tellerfedern aufgebaut sein kann. Erfindungsgemäß liegt ein radialer Umfangsbereich der Tellerfederelementanordnung am Kolben direkt oder indirekt an und stellt diesen bei Nichtbetätigung zurück. Nach einer weiteren Ausgestaltung der Erfindung liegt die Tellerfederanordnung mit ihrem radial äußeren Umfang am Kolben und mit ihrem radial inneren Umfang an einem axial nicht verschiebbaren Anlagebereich der Lamellenkupplung an. Vorzugsweise liegt der radial äußere Bereich der Tellerfederanordnung radial am Kolben in einem Bereich an, welcher im Wesentlichem dem Außenradius des Kolbenraumbereiches entspricht.

Weiterhin betrifft die Erfindung ein Verfahren zum Betrieb einer hydraulisch betätigbaren Lamellenkupplung zur Drehmomentübertragung im Antriebsstrang eines Kraftfahrzeugs, mit einem mittels Hydraulikmedium befüllbaren Kolbenraum eines Kolbens zum Einrücken der Lamellenkupplung und einer Federelementanordnung, welche den Kolben bei Nichtbetätigung zurückstellt und dadurch den Kolbenraum entleert, wobei beim Öffnen der Lamellenkupplung, der Druck im Kolbenraum auf einen Ablagedruck abgesenkt wird, der ein komplettes Rückstellen der Federelementanordnung verhindert.

Bevorzugte Ausgestaltungen der Erfindung sind in den Zeichnungen dargestellt.

Dabei zeigt:
Fig. 1 Ein erfindungsgemäßes Kupplungssystem
Fig. 2 einen Momenten- und Druckverlauf einer Kupplung nach dem Stand der Technik
Fig. 3 einen Momenten- und Druckverlauf einer Kupplung nach der Erfindung
Fig. 4 einen Hydraulikschaltplan einer erfindungsgemäßen Doppelkupplung
Fig. 5 eine Federkennlinie einer erfindungsgemäßen Federelementanordnung
Fig. 6 einen Kraft-, bzw. Druckverlauf eines Kolbens nach der Erfindung.

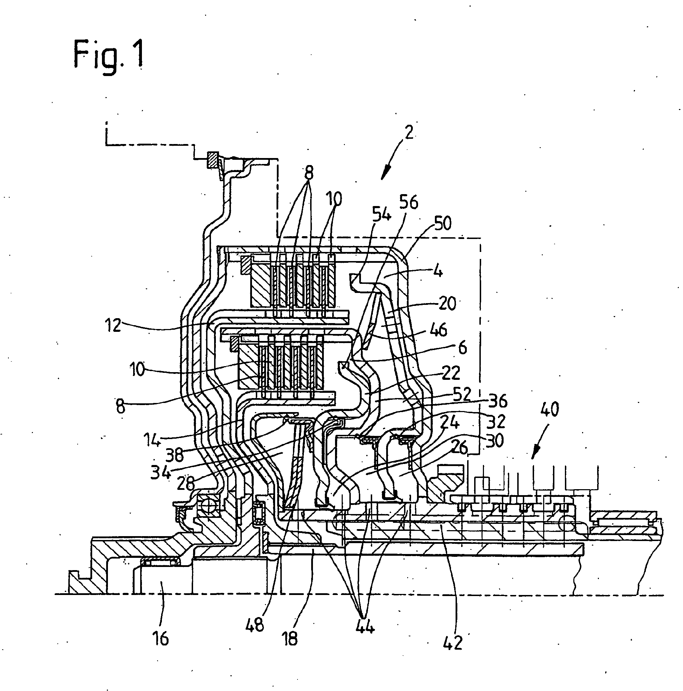

Fig. 1 zeigt eine Doppelkupplungsanordnung 2 mit zwei hydraulisch betätigbaren Lamellenkupplungen 4, 6. Die Lamellenkupplungen bestehen jeweils aus Lamellenpaketen mit Innenlamellen 8 und Außenlamellen 10, wobei die Außenlamellen 10 primärseitig, also motorseitig angeordnet sind und die Innenlamellen 8 jeweils sekundärseitig mittels den Innenlamellenträgern 12, 14 drehfest mit den Getriebeeingangswellen 16,18 verbunden sind. Die Lamellenkupplungen 4, 6 werden mit den Kolben 20, 22 betätigt. Hierzu werden die den Kolben 20, 22 zugeordneten Kolbenräume 24, 26 mit Hydrauliköl, welches als Hydraulikmedium dient befüllt, wobei sich ein Öldruck aufbaut und der jeweilige Kolben verschoben wird. Den Kolbenräumen 24, 26 ist jeweils ein Fliehkraftdruckausgleichsraum 28, 30 zugeordnet, welcher dazu dient, die resultierende Axialkraft, welche auf den Kolben durch die Fliehkraft des Hydraulikmediums bei Rotation desselben wirkt, auszugleichen. Die Kolbenräume 24, 26 und die zugeordneten Druckausgleichsräume 28, 30 sind durch Dichtelemente 32, 34, 36, 38 radial abgedichtet. Die Ölzuführung in die Kolbenräume 24, 26 und die zugeordneten Druckausgleichsräume 28, 30 erfolgt über Ölzuführkanäle 42 und Radialbohrungen 44, welche die Kolbenräume mit den Ölzuführkanälen 42 verbinden. Die Ölzuführkanäle der beiden Kolbenräume 24, 26 enden in den Kolbenräumen, die beiden Druckausgleichsräume werden hingegen mit Kühlöl versorgt, welches durch eine Axialnut der Ölzufuhrnabe zwischen dieser und der äußeren Getriebeeingangswelle 18 an den Radialbohrungen für die Druckausgleichsräume vorbei radial in die Doppelkupplungsanordnung geführt wird. Zur Rückstellung der Kolben 20 und 22 werden die Tellerfederanordnungen 46 und 48 verwendet. Hierbei handelt es sich bei der Tellerfederanordnungen 46 um eine einzelne Tellerfeder und bei der Tellerfederanordnungen 48 um zwei gleichsinnig geschichtete Tellerfedern. Im dargestellten Zustand der Doppelkupplungsanordnung in Fig. 1 sind die Kolbenräume 24 und 26 drucklos und die Kolben 20, 22 liegen durch die Rückstellkräfte der Tellerfederanordnungen 46, 48 an den Außenlamellenträgern 50, 52 an. Die Tellerfederanordnungen 46, 48 sind damit in ihrer maximalen Endlage. Zwischen den Anschlagbereichen 54, 56 der beiden Betätigungskolben 20, 22 und den Endlamellen der beiden Lamellenpakete befindet sich aufgrund von Setzen und Verschleiß der Lamellen axiales Spiel. Beim Betätigen der Lamellenkupplung muss hierdurch erst ein Leerweg der Kolben überwunden werden, bis die Kolben 20, 22 an den Endlamellen anliegen. Dies erfordert zum Einen Zeit um den Kolbenraum soweit zu füllen, bis der Kolben eine Position erreicht hat, welche einer Anlageposition des Kolbens entspricht, in welcher der Anschlagbereich an der Endlamelle anliegt und zum Anderen belastet es die Tellerfederanordnung, da beim Betätigen der Lamellenkupplung die Tellerfeder ihren maximalen Federweg durchfahren muss. Erfindungsgemäß ist deshalb vorgesehen nach der Betätigung der Kupplungsanordnung beim Öffnen der Lamellenkupplung den Kolben 20, 22 nur soweit von der Tellerfederanordnung rückstellen zulassen, bis der Anschlagbereich 54, 56 gerade noch oder nicht mehr am Lamellenpaket anliegt. Zum Halten dieser Kolbenstellung wird erfindungsgemäß im Kolbenraum 24, 26 ein Betätigungsdruck eingestellt, welcher dieser Kolbenstellung entspricht. Beim Öffnen der Lamellenkupplung, wird der Betätigungsdruck erfindungsgemäß auf den Ablagedruck des Kolbens reduziert und dann gehalten.

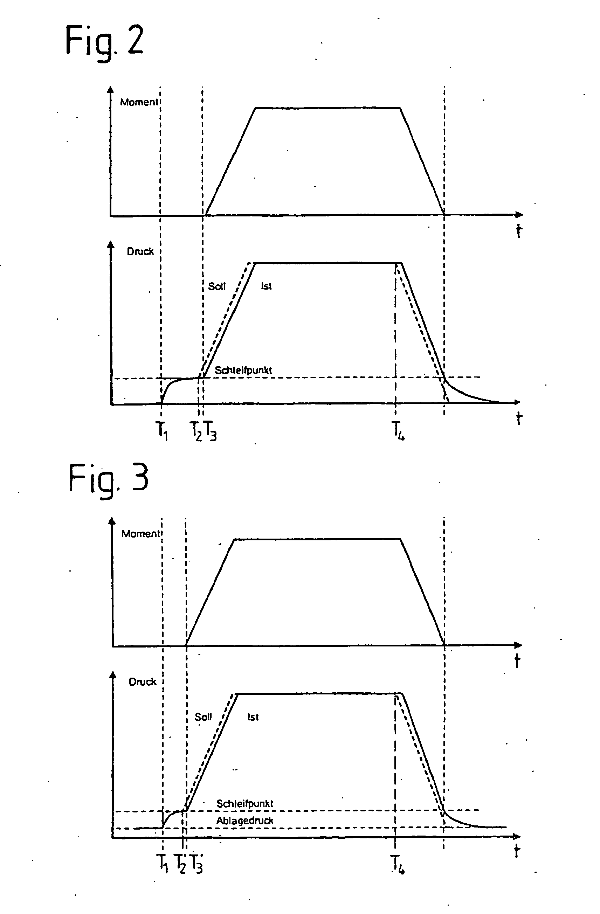

In Figur 2 ist im oberen Diagramm der zeitliche Momentenverlauf und im unteren Diagramm der Druckverlauf einer Betätigung der Lamellenkupplung nach dem Stand der Technik dargestellt. Zum Zeitpunkt T1 liefert die Steuerung ein Drucksignal in Form eines Solldruckes an die Hydraulikeinheit, worauf der reale Druck im Kolbenraum ansteigt. Der Solldruck ist der Druck, welcher dem Schleifpunkt der Kupplung entspricht, bei welchem die Kupplung anfängt Drehmoment zu übertragen. Zum Zeitpunkt T2 ist der Solldruck, welcher dem Schleifpunkt entspricht, erreicht und die Steuerung gibt eine Druckrampe zum Schließen der Kupplung vor, auf welche der Kupplungsdruck eingeregelt wird. Der Ist-Druck der Kupplung folgt damit leicht zeitversetzt dem Soll-Druck bis dieser erreicht ist. Ab dem Zeitpunkt T3 beginnt daher, wie aus dem oberen Diagramm entnehmbar ist, die Drehmomentübertragung der Kupplung. Ab einem Zeitpunkt T4 gibt die Steuerung eine negative Druckrampe zum Öffnen der Lamellenkupplung vor. Der Solldruck wird dabei komplett auf Null reduziert, wobei auch hier wieder der Ist-Druck der Kupplung dem Solldruck zeitversetzt hinterherläuft. Unterhalb des Schleifpunktes sinkt der Ist-Druck langsamer als der Solldruck, da der Kolben nicht mehr an den Lamellen anliegt und die Tellerfeder den Kolben zurückdrückt und damit den Kolbenraum weitgehend entleert.

In Figur 3 ist im oberen Diagramm der zeitliche Momentenverlauf und im unteren Diagramm der Druckverlauf einer Betätigung der Lamellenkupplung nach der Erfindung dargestellt. Der Kupplungs-Solldruck befindet sich bis zum Zeitpunkt T1, zu welchem ein Drucksignal kommt, auf dem Niveau des Ablagedrucks. Der Ablagedruck ist hierbei niedriger als der Druck, welcher dem Schleifpunkt entspricht. Zum Zeitpunkt T1 gibt die Steuerung wieder den Druck, welcher dem Schleifpunkt entspricht, als Solldruck vor, auf den der Druck im Kolben eingeregelt wird. Zum Zeitpunkt T2' ist der Solldruck erreicht und die Steuerung gibt eine Druckrampe zum Schließen der Kupplung vor. Ab T3' beginnt die Kupplung Drehmoment zu übertragen. Dadurch, dass die Kolbenposition durch den Ablagedruck nicht in Ihrer maximalen Öffnungsstellung war, befindet sich der Zeitpunkt T2' vor T2 und T3' vor T3. Damit kann die Kupplung ein Signal zum Schließen der Kupplung schneller umsetzen und reagiert damit dynamischer. Zum Zeitpunkt T4 gibt die Steuerung eine negative Druckrampe zum Öffnen der Lamellenkupplung vor. Der Solldruck wird dabei komplett auf den Ablagedruck reduziert, wobei auch hier wieder der Ist-Druck der Kupplung dem Solldruck zeitversetzt hinterherläuft. Unterhalb des Schleifpunktes sinkt der Ist-Druck langsamer als der Solldruck, da der Kolben nicht mehr an den Lamellen anliegt und die Tellerfeder den Kolben bis in seine Ablageposition, welche durch den Ablagedruck bestimmt ist, zurückdrückt.

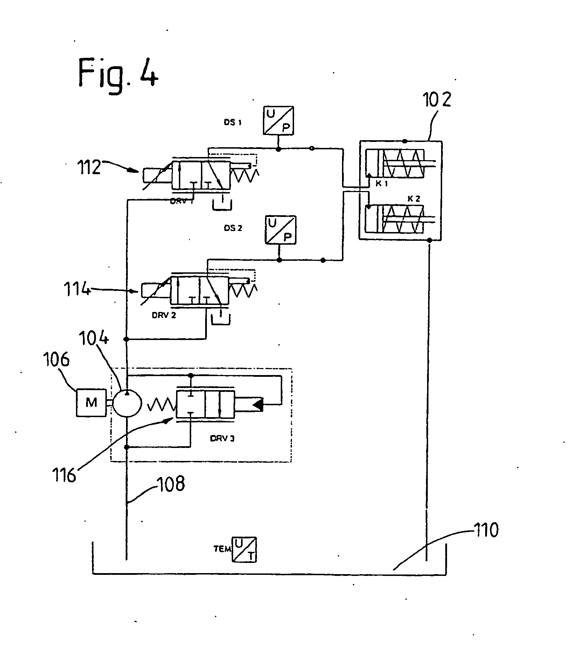

In Fig. 4 ist ein Hydraulikschaltplan der erfindungsgemäßen Doppelkupplungsanordnung 102 dargestellt. Die Hydraulikpumpe 104 wird vom Fahrzeugmotor 106 angetrieben und fördert über Hydraulikverbindungen 108 Hydrauliköl vom Tank 110 zu den beiden Druckregelventilen 112, 114, welche die Kolbenräume der beiden Kupplungsanordnungen K1 und K2 mit Druck versorgen. Da die Pumpe nicht unabhängig in ihrer Drehzahl regelbar ist, ist parallel zur Pumpenanordnung das Druckregelventil 116 angeordnet, welches den Systemdruck regelt, der an den beiden Druckregelventilen 112, 114 anliegt. Der Ablagedruck der Kupplungsanordnungen wird jeweils mit dem in Wirkverbindung stehenden Druckregelventil 112, 114 eingestellt. Weiterhin sind zwischen den Druckregelventilen 112, 114 und den zugeordneten Kupplungsanordnungen K1, K2 Drucksensoren 118, 120 angeordnet, welche den in den Kolbenräumen anliegenden Druck messen können und einer nicht dargestellten Steuereinheit eine, den Druckwert korrelierte, Steuergröße, wie Spannung, liefert.

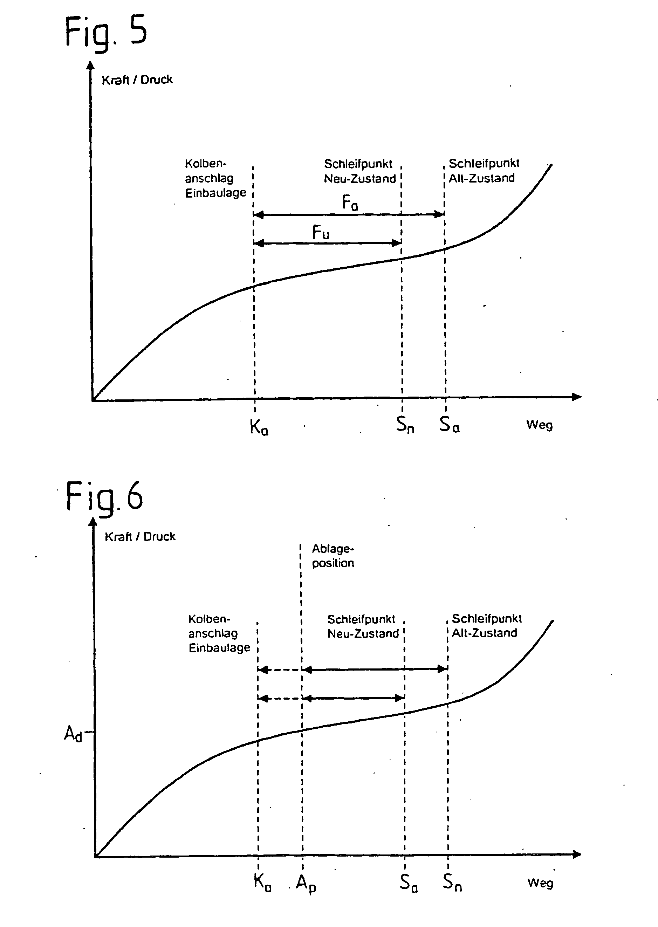

Fig. 5 zeigt ein Diagramm der Federkennlinie einer Tellerfeder zum Rückstellen des Kupplungskolbens. Hierbei ist in Abhängigkeit des Einfederweges der Kraftverlauf, welcher auf den Kolben wirkt, dargestellt. Der Arbeitsbereich der Tellerfederanordnung, welche als Rückstellfeder arbeitet, liegt im eingebauten Zustand im Wesentlichen zwischen der Kolbenanschlag Einbaulage Ka, welche dem Zustand der Rückstellfeder entspricht, bei welchem der Kolben am Lamellenträger anliegt, und dem Schleifpunkt S der Kupplungsanordnung. Die Änderung der Kolbenposition zwischen der Schleifpunkt-Position S und der Position bei vollem Druck an der Lamellenkupplung ist bezogen auf den Einfederweg zwischen Kolbenanschlag Ka am Lamellenträger und Schleifpunkt-Position S nur gering und kann bei Betrachtung des Federweges vernachlässigt werden. Der Schleifpunkt S der Kupplung verlagert sich allerdings über die Lebenszeit der Kupplung weg vom Kolbenanschlag Ka, sodass der Position des Kolbens, welche dem Schleifpunkt Sa bei gesetzten und verschleißenden Lamellen entspricht weiter entfernt der Kolbenposition liegt, welche im Neuzustand der Kupplung dem Schleifpunkt Sn entspricht. Mit Fn ist der Federweg vom Kolbenanschlag Ka bis zum Schleifpunkt Sn im Neuzustand bezeichnet und mit Fa ist der Federweg vom Kolbenanschlag Ka bis zum Schleifpunkt Sa bei gealterter Kupplung bezeichnet. Demzufolge wächst der Federweg bei kompletten Einfedern der Tellerfeder mit alternder Kupplung stetig und somit auch die damit verbundene Federbelastung, welche proportional dem Federweg ist.

In Fig. 6 ist der Kraft-, bzw. Druckverlauf der Tellerfeder und die erfindungsgemäße Kolbenhubreduktion dargestellt.
Mit Ap ist hierbei die Ablageposition des Kolbens bezeichnet, welche die Kolbenposition beschreibt, die der Kolben einnimmt, wenn der Druck im Kolbenraum dem Ablagedruck Ad entspricht. Der Federweg ist damit sowohl bei neuer als auch bei gealterter Kupplung gegenüber dem Federweg aus Figur 5 reduziert. Natürlich kann der Ablagedruck Ad über die Lebensdauer der Kupplung entsprechend dem aktuellen Schleifpunkt der Kupplung angepasst werden, sodass der Federweg der Tellerfeder der einem Druckunterschied zwischen Ad und Kupplungsdruck am Schleifpunkt entspricht, im Wesentlichen über die Lebenszeit der Kupplung konstant gehalten werden kann. Damit bleibt auch die Federbelastung bei jedem Einfedern konstant, sodass die Gesamtbelastung der Tellerfeder über die Lebenszeit der Kupplung reduziert wird.

### Bezugszeichenliste

- 2.: Doppelkupplungsanordnung
- 4.: Lamellenkupplung
- 6.: Lamellenkupplung
- 8.: Innenlamellen
- 10.: Außenlamellen
- 12.: Innenlamellenträger
- 14.: Innenlamellenträger
- 16.: innere Getriebeeingangswelle
- 18.: äußere Getriebeeingangswelle
- 20.: Kolben
- 22.: Kolben
- 24.: Kolbenraum
- 26.: Kolbenraum
- 28.: Fliehkraftdruckausgleichsraum
- 30.: Fliehkraftdruckausgleichsraum
- 32.: Dichtelement
- 34.: Dichtelement
- 36.: Dichtelement
- 38.: Dichtelement
- 40.: Ölzufuhrnabe
- 42.: Ölzufuhrkanäle
- 44.: Radialbohrung
- 46.: Tellerfederanordnung
- 48.: Tellerfederanordnung
- 50.: Außenlamellenträger
- 52.: Außenlamellenträger
- 54.: Anschlagbereich
- 56.: Anschlagbereich
- 102.: Doppelkupplungsanordnung
- 104: Hydraulikpumpe
- 106.: Fahrzeugmotor
- 108.: Hydraulikverbindung
- 110.: Tank
- 112.: Druckregelventil
- 114.: Druckregelventil
- 116.: Druckregelventil
- 118.: Drucksensor
- 120.: Drucksensor

## Patentansprüche

1. Hydraulisch betätigbare Lamellenkupplung zur Drehmomentübertragung im Antriebsstrang eines Kraftfahrzeugs, mit einem mittels Hydraulikmedium befüllbaren Kolbenraum (24,26) eines Kolbens (20,22) zum Einrücken der Lamellenkupplung und einer Federelementanordnung (46,48), welche den Kolben bei Nichtbetätigung zurückstellt und **dadurch** den Kolbenraum (24,26) entleert,
**dadurch gekennzeichnet, dass** die Lamellenkupplung derart ausgebildet ist, dass beim Öffnen der Lamellenkupplung, der Druck im Kolbenraum (24, 26) auf einen Ablagedruck abgesenkt wird, der ein komplettes Rückstellen der Federelementanordnung (46,48) verhindert.

2. Hydraulisch betätigbare Lamellenkupplung nach Anspruch 1,
**dadurch gekennzeichnet,**
**dass** der Ablagedruck so eingestellt wird, das ein Kolbenrückstellweg beim Öffnen der Lamellenkupplung minimiert wird.

3. Hydraulisch betätigbare Lamellenkupplung nach Anspruch 1,
**dadurch gekennzeichnet,**
**dass** der Ablagedruck kleiner einem Kriechdruck ist, welcher ein Kriechen des Kraftfahrzeugs bewirkt.

4. Hydraulisch betätigbare Lamellenkupplung nach Anspruch 1,
**dadurch gekennzeichnet,**
**dass** der Wert des Ablagedrucks in Abhängigkeit von Betriebsparametern des Kraftfahrzeugs unterschiedlich ist.

5. Hydraulisch betätigbare Lamellenkupplung nach Anspruch 3
**dadurch gekennzeichnet,**
**dass** der Ablagedruck von wenigstens einem der Betriebsparameter Motordrehzahl, Drehzahl einer Getriebeeingangswelle, Öltemperatur, Drehmoment, Kühlölvolumenstrom abhängig ist.

6. Hydraulisch betätigbare Lamellenkupplung nach Anspruch 1,
**dadurch gekennzeichnet,**
**dass** der Ablagedruck des Kolbens (20,22) unabhängig von Schaltzuständen eines Getriebes eingestellt wird.

7. Hydraulisch betätigbare Lamellenkupplung nach Anspruch 1,
**dadurch gekennzeichnet,**
**dass** der Ablagedruck des Kolbens unabhängig von Betriebsartenwahlstellungen eines Getriebewahlhebels eingestellt wird

8. Hydraulisch betätigbare Lamellenkupplung nach Anspruch 1,
**dadurch gekennzeichnet,**
**dass** die Federelementanordnung eine Tellerfederanordnung (46,48) ist, welche mit einem radialen Umfangsbereich axial gegen den Kolben (20,22) drückt.

9. Hydraulisch betätigbare Lamellenkupplung nach Anspruch 7,
**dadurch gekennzeichnet,**
**dass** die Tellerfederanordnung (46,48) mit ihrem radial äußeren Umfang am Kolben (20,22) und mit ihrem radial inneren Umfang an einem axial nicht verschiebbaren Anlagebereich der Lamellenkupplung anliegt.

10. Verfahren zum Betrieb einer hydraulisch betätigbaren Lamellenkupplung zur Drehmomentübertragung im Antriebsstrang eines Kraftfahrzeugs, mit einem mittels Hydraulikmedium befüllbaren Kolbenraum (24,26) eines Kolbens zum Einrücken der Lamellenkupplung und einer Federelementanordnung (46,48), welche den Kolben (20,22) bei Nichtbetätigung zurückstellt und **dadurch** den Kolbenraum (24,26) entleert,
**dadurch gekennzeichnet,**
**dass** beim Öffnen der Lamellenkupplung, der Druck im Kolbenraum auf einen Ablagedruck abgesenkt wird, der ein komplettes Rückstellen der Federelementanordnung verhindert.

## Claims

1. Hydraulically actuable multiple disc clutch for the transmission of torque in the drive train of a motor vehicle, having a piston chamber (24, 26), which can be filled by means of hydraulic medium, of a piston (20, 22) for engaging the multiple disc clutch, and having a spring-element arrangement (46, 48) which resets the piston during non-actuation and empties the piston chamber (24, 26) as a result, **characterized in that** the multiple disc clutch is configured in such a way that, when the multiple disc clutch is opened, the pressure in the piston chamber (24, 26) is lowered to a distance pressure which prevents complete resetting of the spring-element arrangement (46, 48).

2. Hydraulically actuable multiple disc clutch according to Claim 1, **characterized in that** the distance pressure is set in such a way that a piston resetting path during opening of the multiple disc clutch is minimized.

3. Hydraulically actuable multiple disc clutch according to Claim 1, **characterized in that** the distance pressure is smaller than a crawling pressure which causes the motor vehicle to crawl.

4. Hydraulically actuable multiple disc clutch according to Claim 1, **characterized in that** the value of the distance pressure varies as a function of operating parameters of the motor vehicle.

5. Hydraulically actuable multiple disc clutch according to Claim 3, **characterized in that** the distance pressure is a function of at least one of the operating parameters engine speed, rotational speed of a transmission input shaft, oil temperature, torque and volumetric flow of cooling oil.

6. Hydraulically actuable multiple disc clutch according to Claim 1, **characterized in that** the distance pressure of the piston (20, 22) is set independently of switching states of a transmission.

7. Hydraulically actuable multiple disc clutch according to Claim 1, **characterized in that** the distance pressure of the piston is set independently of operating-mode selection positions of a gearshift lever.

8. Hydraulically actuable multiple disc clutch according to Claim 1, **characterized in that** the spring-element arrangement is a disc-spring arrangement (46, 48) which presses axially against the piston (20, 22) with a radial circumferential region.

9. Hydraulically actuable multiple disc clutch according to Claim 7, **characterized in that** the radially outer circumference of the disc-spring arrangement (46, 48) is in contact with the piston (20, 22), and the radially inner circumference of the disc-spring arrangement (46, 48) is in contact with an axially non-displaceable bearing region of the multiple disc clutch.

10. Method for operating a hydraulically actuable multiple disc clutch for the transmission of torque in the drive train of a motor vehicle, having a piston chamber (24, 26), which can be filled by means of hydraulic medium, of a piston for engaging the multiple disc clutch, and having a spring-element arrangement (46, 48) which resets the piston (20, 22) during non-actuation and empties the piston chamber (24, 26) as a result, **characterized in that**, when the multiple disc clutch is opened, the pressure in the piston chamber is lowered to a distance pressure which prevents complete resetting of the spring-element arrangement.

## Revendications

1. Embrayage multidisques à commande hydraulique pour le transfert de couple dans la transmission d'un véhicule automobile, comprenant une chambre de piston (24, 26) d'un piston (20, 22) pouvant être remplie de fluide hydraulique, pour l'embrayage de l'embrayage multidisques et un agencement d'éléments à ressort (46, 48) qui ramène le piston lorsqu'il n'est pas actionné et vide de ce fait la chambre de piston (24, 26),
**caractérisé en ce que** l'embrayage multidisques est réalisé de telle sorte que lors de l'ouverture de l'embrayage multidisques, la pression dans la chambre de piston (24, 26) est abaissée à une pression de stockage qui empêche un rappel complet de l'agencement d'éléments à ressort (46, 48).

2. Embrayage multidisques à commande hydraulique selon la revendication 1,
**caractérisé en ce que**
la pression de stockage est ajustée de telle sorte qu'une course de rappel du piston est minimisée lors de l'ouverture de l'embrayage multidisques.

3. Embrayage multidisques à commande hydraulique selon la revendication 1,
**caractérisé en ce que**
la pression de stockage est inférieure à une pression de marche lente qui provoque une marche lente du véhicule automobile.

4. Embrayage multidisques à commande hydraulique selon la revendication 1,
**caractérisé en ce que**
la valeur de la pression de stockage est différente en fonction de paramètres de fonctionnement du véhicule automobile.

5. Embrayage multidisques à commande hydraulique selon la revendication 3,
**caractérisé en ce que**
la pression de stockage dépend d'au moins l'un des paramètres de fonctionnement régime du moteur, vitesse d'un arbre d'entrée de boîte de vitesses, température d'huile, couple, débit volumique d'huile de refroidissement.

6. Embrayage multidisques à commande hydraulique selon la revendication 1,
**caractérisé en ce que**
la pression de stockage du piston (20, 22) est ajustée indépendamment des états de commutation d'une boîte de vitesses.

7. Embrayage multidisques à commande hydraulique selon la revendication 1,
**caractérisé en ce que**
la pression de stockage du piston est ajustée indépendamment des positions de sélection des types de fonctionnement d'un levier de sélection de boîte de vitesses.

8. Embrayage multidisques à commande hydraulique selon la revendication 1,
**caractérisé en ce que**
l'agencement d'éléments à ressort est un agencement de ressorts Belleville (46, 48), qui presse axialement contre le piston (20, 22) avec une région périphérique radiale.

9. Embrayage multidisques à commande hydraulique selon la revendication 7,
**caractérisé en ce que**
l'agencement de ressorts Belleville (46, 48) s'applique avec sa périphérie radialement extérieure contre le piston (20, 22) et avec sa périphérie radialement intérieure contre une région d'appui de l'embrayage multidisques non déplaçable axialement.

10. Procédé de fonctionnement d'un embrayage multidisques à commande hydraulique pour le transfert de couple dans la transmission d'un véhicule automobile, comprenant une chambre de piston (24, 26) d'un piston (20, 22) pouvant être remplie de fluide hydraulique, pour l'embrayage de l'embrayage multidisques et un agencement d'éléments à ressort (46, 48) qui ramène le piston (20, 22) lorsqu'il n'est pas actionné et vide de ce fait la chambre de piston (24, 26),
**caractérisé en ce que**
lors de l'ouverture de l'embrayage multidisques, la pression dans la chambre de piston est abaissée à une pression de stockage qui empêche un rappel complet de l'agencement d'éléments à ressort.
